# EUROPÄISCHE PATENTSCHRIFT

(11) **EP 0 372 027 B1**
(45) Veröffentlichungstag und Bekanntmachung des Hinweises auf die Patenterteilung: **22.12.1993**
(21) Anmeldenummer: 89904758.3
(22) Anmeldetag: 01.05.1989
(51) Int. Cl.: F16L 55/16, F16L 55/162

(54) **VERFAHREN ZUM ABDICHTEN VON SCHADHAFTEN ROHRLEITUNGEN**
PROCESS FOR SEALING DAMAGED PIPES
PROCEDE DE COLMATAGE DE CANALISATIONS ENDOMMAGEES

(30) Priorität: 17.05.1988 CH 1849/88; 03.04.1989 CH 1212/89
(43) Veröffentlichungstag der Anmeldung: 13.06.1990
(73) Patentinhaber: A. KÄPPELI'S SÖHNE AG, CH-6430 Schwyz (CH)
(72) Erfinder: ZUEST, Harry, CH-8703 Erlenbach (CH); KÄPPELI, Guido, CH-6430 Schwyz (CH)
(74) Vertreter: Frei, Alexandra Sarah
(86) Internationale Anmeldenummer: CH8900077
(87) Internationale Veröffentlichungsnummer: WO8911617

(56) Entgegenhaltungen:
- EP-A- 0 082 212
- EP-A- 0 094 819
- FR-A- 2 371 242
- US-A- 4 256 445

## Beschreibung

Die Erfindung betrifft ein Verfahren zum Abdichten von schadhaften Rohrleitungen.

Die Abdichtung schadhafter Rohrleitungen, insbesondere von Kanalisationsrohren hat ihre eigene Problematik. Mehrere Faktoren treffen zusammen, wenn eine schadhafte Kanalisation auszubessern ist. Die schadhaften Stellen können lediglich feine Risschen sein, die gerade zum Durchsickern gross genug sind, aber auch armdicke Ausbrüche, die einen ungehinderten Durchtritt des Kanalisationsinhalts in das umgebende Erdreich gestatten. Diese schadhaften Stellen liegen meistens unter einem Schlammbelag und sie sind ausserdem ausgiebig der Nässe ausgesetzt. Kanalisationsrohre, die unter Umständen bis mannhohe Weite aufweisen können, sind, auch bei grossen Durchmessern für Menschen meist nur schwer bis gar nicht zugänglich. Ohne Ausnahme ist es in Kanalisationen (unter der Erde) zudem noch kalt. Faul- und andere Gase beeinflussen das Milieu. Ferner sind in der Regel nur die manifesten Schäden (Lecks) erkennbar, während die sich zu sichtbaren Schäden auswachsenden Vorstufen nicht ohne weiteres detektierbar sind. Eine mühsam ausgebesserte Kanalisation kann deshalb kurze Zeit darauf wieder Lecks aufweisen, die sich an solchen nichtdetektierbaren Stellen später gebildet haben.

Um die eben geschilderten Probleme zu umgehen, sind verschiedene Vorgehen entwickelt worden, mit deren Hilfe solche Rohrleitungen ausgebessert werden können. In der Tat hat sich damit die Problematik aber lediglich verlagert. An Stelle eines Menschen beobachten und reparieren komplizierte, ihrerseits auf Schäden anfällige Geräte die schadhaften Stellen. Dabei werden bspw. durch solche Geräte die aufgefundenen schadhaften Stellen angebohrt und mit Kunstharzen hinterfüllt (bspw. WO-86/03818) oder es werden bspw. mit einem anderen Gerät die schadhaften Stellen verspachtelt und auf diese Weise abgedichetet (WO-86/04975). Ein anderes Vorgehen ist das quasi Ersetzen eines ganzen Rohrteils mit der/den Schadenstelle/n durch Einziehen eines harzgetränkten Schlauches, welcher im schadhaften Rohr aufgeblasen und anschliessend ausgehärtet wird beispielsweise EP-0'082'212, DE-35'13'956, WO-87/04226.

Ein Verfahren gemäss dem Oberbegriff des Anspruchs 1 ist aus der Schrift FR-A-2 371 242 bekannt.

Alle diese Methoden verwenden härtbare Kunstharze (Harzsysteme) und bei der Verwendung von Kunstharzen ist das Grundproblem deren Aushärtung. Im Milieu, in welchem diese Kunstharzsysteme aushärten müssen, herrschen Schmutz, Nässe, Kälte, Enge und andere eher missliche Umstände vor, also keinesweg ideale Bedingungen, um eine sicher und dauerhaft gehärtete Harzschicht mit langer Standzeit zu erhalten.

Es ist Aufgabe der Erfindung, ein Verfahren zum Ausbessern von Rohrleitungen anzugeben, das einfach anzuwenden ist, welches keine komplizierten mechanischen Geräte benötigt und mit welchem zusammenhängende Rohrbeschichtungen erzielt werden können, die schnell und sicher aushärten und in verhältnismässig kurzer Zeit wieder dem Betrieb übergeben werden können und zudem lange Standzeiten aufweisen.

Diese Aufgabe wird durch die in dem unabhängigen Patentanspruch 1 angegebene Erfindung gelöst.

Anhand der nachfolgend aufgeführten Figuren werden verschiedene Ausführungsformen der Erfindung eingehend diskutiert.

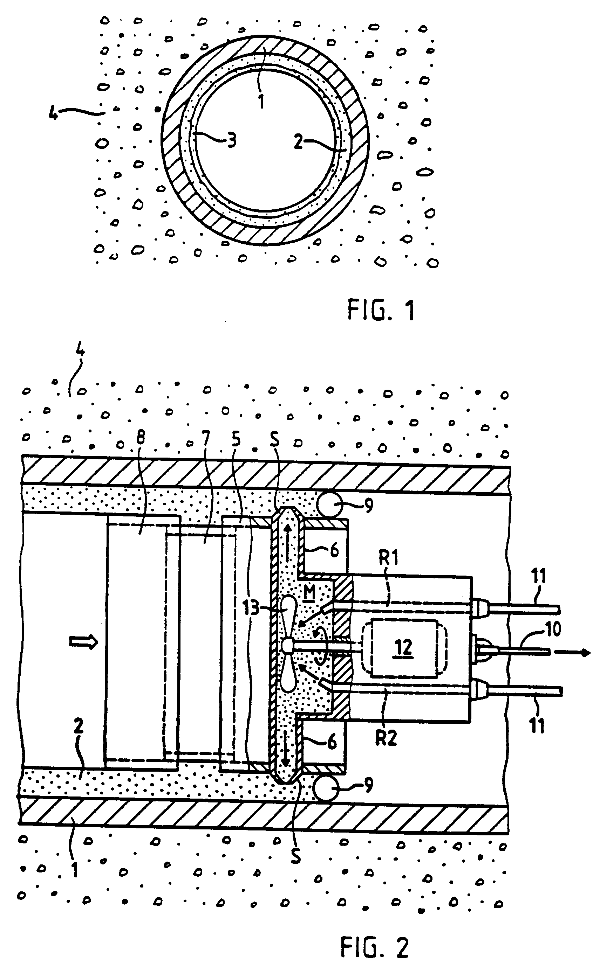

- Fig.1: zeigt im Querschnitt ein im Erdreich verlaufendes Kanalisationsrohr, das eine isolierende Zwischenschicht aus einem Schaumharz und eine tragende, harte, glatte und undurchlässige Epoxyharz-Innenschicht aufweist. Die Schichtdicken sind im Vergleich zum Kanalisationsrohr stark überzeichnet. In Wirklichkeit ist die Zwischenschicht vorzugsweise 0.5 bis 1.5 cm dick und die tragende Innenschicht ist vorzugsweise 0.5 bis 1.5 mm dick.
- Fig.2: zeigt im Längsschnitt ein Kanalisationsrohr und in schematischer Darstellung eine Ausführungsform einer Vorrichtung zum Auftragen der isolierenden Zwischenschicht. Die Vorrichtung, in welcher die Harzkomponenten zusammengeführt und gemischt, sowie ausgespritzt werden, zieht oder schleppt ein Formrohr mit, das einen kreisförmigen Spalt zwischen Form und Kanalisationsrohr bildet, der mit aushärtbarem Schaum ausgegossen wird. Das Formrohr ist mehrgliedrig und passt sich evtl. Rohrkrümmungen an.

Die zum Reparieren der schadhaften Rohrleitungen verwendeten Harzsysteme (meist Polyester) sind in der Regel wärmehärtend, sodass der Harzmischung genügend Wärmeenergie zugeführt werden muss, um die chemische Durchhärtung ablaufen zu lassen. Das schadhafte Rohr (bspw. durchfeuchteter Beton) zusammen mit dem dieses Rohr umgebenden Erdreich bildet gleich hinter der zu härtenden Harzschicht eine derart grosse Wärmesenke, dass nur mit einem ausserordentlichen Aufwand soviel Wärmeenergie zugeführt werden kann (wenn überhaupt möglich), um das Harz so auszuhärten, dass bspw. die nötige Festigkeit und/oder lange Standzeiten erzielbar sind.

So wird in einem der oben angegebenen Beispiele zum Stand der Technik die Wärme durch Wasser, welches eine hohe spezifische Wärmekapazität aufweist, an das zu härtende Harzsystem herangeführt, wozu der kurz vorher eingeharzte Schlauch im Kanalisationsrohr umgestülpt werden muss, da in einem wässrigen Milieu die Härtung nicht stattfinden kann.

Obwohl Wasser als Energieüberträger ausreichend gut und zudem noch kostengünstig ist, wurden weitere Methoden vorgeschlagen, nämlich die Energie über UV-Strahlung dem Harzsystem, die nur Polyester sein können, zuzuführen. So wurden eingeharzte Schläuche im Rohr aufgeblasen und anschliessend mit UV bestrahlt. Mit UV gehärtete Harze weisen aber den Nachteil auf, dass sie leichter brüchig und zudem von Bakterien eher befallen werden. Die mit dieser Technik behandelten und in das schadhafte Rohrsystem eingelegten Rohre werden kaum ausreichende Standzeiten aufweisen. Ausserdem ist der Aufwand eine einwandfreie Strahlungshärtung zu erzielen recht beträchtlich.

Eine weitere Möglichkeit besteht in der Aushärtung eines härtbaren Harzes mit Gasen, denen eine Härtungskomponente beigefügt ist. Dies kann gleich mit dem Aufpumpen des schlauchförmigen Trägers für das in die Kanalisation eingebrachten Harzsystems geschehen. Das Härtungsgas wird solange durch das beharzte Schlauchgebilde durchströmen gelassen, bis die Aushärtung erfolgt ist. Mit einer Gashärtung sind jedoch nur dünne Schichten erzielbar, deren Festigkeit in Rohrform oftmals ungenügend ist. Die an der Oberfläche ausgehärtete Gasschicht wirkt als Barriere zwischen dem Härtgas und dem darunterliegenden, noch zu härtenden Harzmaterial.

Aus dieser Problematik heraus entstand die Idee, für das die gewünschte feste Röhre aufbauen sollende Harzsystem ein Milieu derart zu schaffen, dass in diesem ein problemloser Aushärtvorgang etabliert werden kann und dadurch ein Wand(Rohr)gebilde entsteht, das die nötige Festigkeit erreichen kann. Da die Aushärtung chemisch vollständig ist, wird eine solche Harzschicht auch die vorgegebene Standzeit erreichen.

Zwischen die Harzschicht, die das innere und eigentliche neue Kanalisationsrohr bilden wird und der geschilderten Wärmesenke ausserhalb der zu härtenden Harzschicht, soll eine Isolierschicht, also eine Zwischenschicht gelegt werden, die Schmutz und Nässe abhält und gegen den Durchgang von Wärmeenergie eine Sperre bildet. Ferner soll diese isolierende Zwischenschicht nebst einer ausreichenden mechanischen Festigkeit auch eine chemisch ausreichend gute Unterlage bilden, um darauf eine harte, widerstandsfähige Harzschicht auszubilden. Um dies zu bewerkstelligen, musste noch ein Material gefunden werden, dass alle diese Forderungen erfüllt und zudem als Vermittler zwischen der unwirtlichen Aussenwelt und dem geschützten Milieu sich auch mit einer solchen Aussenwelt von Schmutz, Nässe, Mikroben etc. vertragen kann. Dieses Material ist vorzugsweise ein Polyurethan-Kunstharz.

Dieses spezielle Problem wird durch die vorliegende Erfindung elegant gelöst.

Die ganze Problematik wird nämlich mit einer neuen Idee angegangen. Für das Harzsystem, mit dem die gewünschte feste Röhre aufgebaut werden soll, wird eine Umgebung geschaffen, in der ein problemloser Aushärtvorgang etabliert werden kann. Da die Aushärtung dadurch chemisch vollständig ist, wird die aufgebrachte Harzschicht auch die vorgegebene Standzeit erreichen. Zwischen die Harzschicht, die das innere und eigentliche neue Kanalisationsrohr bildet, und der erwähnten Wärmesenke ausserhalb der zu härtenden Harzschicht, wird eine Isolierschicht, also eine Zwischenschicht gelegt, die Schmutz und Nässe abhält und gegen den Durchgang von Wärmeenergie eine Sperre bildet. Ferner soll diese isolierende Zwischenschicht nebst einer ausreichenden mechanischen Festigkeit auch eine chemisch ausreichend gute Unterlage bilden, um darauf eine harte, widerstandsfähige Harzschicht auszubilden. Um dies zu bewerkstelligen, wurde ein Material gefunden, das alle diese Anforderungen erfüllt und zudem als Vermittler zwischen der für die Harzauskleidung ungeeigneten "Aussenwelt" und dem zum Aufbringen der Harzschicht abgeschirmten Milieu sich auch mit einer solchen Aussenwelt von Schmutz, Nässe, Mikroben etc. vertragen kann. Dieses Material ist ein Polyurethan-Kunstharz.

Zur Reparatur eines undichten Kanalisationsstücks geht man folgendermassen vor. Das zu sanierende Rohr, dessen undichte Stellen vorher detektiert wurden, wird gemäss bekanntem Vorgehen ausgewaschen. Nach einer groben Trocknung wird das noch nasse Rohr (das keine Wasserpfützen aufweisen darf, evtl. das Wasser aufsaugen) mit einem Polyurethan-Harzsystem bspw. vom Typ **Polylite VP-626 RG30/8664** im Aufsprühverfahren ausgeschäumt. Die Komponente Polylite VP-626 RG 30 enthält Polyätherpolyole und die Komponente Polylite 8664 enthält ein reaktives Isocyanat. Die Mischungsverhältnisse entnimmt man dem Datenblatt und der Anleitung des Herstellers, ebenso die Misch- und Schäumungsvorschriften.

Dieses Harz-System kann mit einer entsprechenden Schaumsprühmaschine senkrecht, waagrecht über Kopf auf besonders schwierige Oberflächen, wie auch in Hohlräume darin appliziert werden. Dieses Harzsystem enthält, wie gesagt, reaktives Isocyanat; der Kontakt mit der Haut, Augen oder Kleidung muss vermieden werden. Das maschinelle Sprühen, das ohne direkte Beihilfe von Menschen ferngesteuert abläuft, ist hier ein grosser Vorteil. Trotzdem soll beim Arbeiten bzw. Manipulieren mit diesen Substanzen ist eine Schutzbrille getragen werden, eventuell auch Schutzhandschuhe und Atemmaske.

Das angegebene Harzsystem ist bei Raumtemperatur selbstschäumend. Durch die kurze Crèmezeit und Klebfreizeit besteht die Möglichkeit, besonders schwierige Oberflächen in kürzester Zeit zu isolieren. Der Schaum zeigt trotz niedriger Dichte gute mechanische Eigenschaften. Der ausgehärtete Schaum weist, im Verhältnis zu seinem Gewicht, eine hohe Festigkeit und ausgezeichnete Isolations-Eigenschaften auf.

Mit einem solchen Harzsystem erhält man eine über 90% geschlossenzellige Schicht mit einer Wärmeleitzahl von 0,015 - 0,025 kcal/mh°C, was für die hier diskutierten Zwecke, eine 0.5 bis 1.5 cm dicke Schicht, völlig ausreichend ist. Die Crèmezeit beträgt 2-3 s und die Klebfreizeit 10-15 s, die ideale Mischtemperatur liegt bei 20°C. Die Druckfestigkeit des ausgehärteten Schaumes beträgt 2 kJ/m², wodurch eine weitere Bearbeitung innerhalb des Rohrgebildes ohne weiteres möglich ist. Die kurze Aushärtdauer, die durch Einleiten von warmer Luft unterstützt werden kann, erlaubt mit einer Vorrichtung, wie sie weiter unten noch angegeben wird, eine "Rohrbeschichtungs-Geschwindigkeit" bis zu ca. 2m/min, was eine sehr befriedigende Leistung darstellt.

Die weitere Bearbeitung in der nun isolierten Kanalisation besteht im Auftragen einer weiteren Harzschicht, der eigentlichen "Röhre", die nun auf die Isolierschicht aufgespritzt wird. Vorzugsweise wird dafür ein Epoxy-Zweikomponentenharz, bspw. des Typs Araldit, verwendet, das schon in dünner Schicht, ca. 0,2-1,5 mm eine dichtende Einlage mit der nötigen Stabilität bildet. Da dieses Harzsystem sie auf die vorher gebildete isolierende Unterlage aufgebracht wird, kann anschliessend problemlos wärmegehärtet werden, bspw. mit erwärmter Luft. Die zugeführte Wärme wird dann nicht mehr in die Umgebung abgeleitet, sondern im Harz gespeichert, sodass die ganze Energie zur Härtung zur Verfügung steht. Diese zweite Harzschicht ist dann die mechanisch feste und die Kanalisation abdichtende Schicht, die mit dem durch das Rohr geführten Inhalt direkt in Berührung kommt.

Falls nötig, kann eine weitere, finale Schicht des gleichen Harzmaterials mit einer anderen Viskosität aufgebracht werden, um die Oberfläche noch feinporiger und strömungstechnisch glatter zu gestalten und um zugleich die Dicke des Rohrs mit zu erhöhen.

Figur 1 zeigt in schematischer Darstellung im Querschnitt ein im Erdreich 4 verlaufendes Kanalisationsrohr 1, in der Regel aus durchnässtem Beton bestehend, das eine isolierende Zwischenschicht 2 aus einem Schaumharz aufgetragen hat. Der Schaumharz, ein PUR, haftet nach der erfindungsgemässen Vorbehandlung der grob getrockneten, noch feuchten bis nassen Betonfläche ausreichend. Wie diese Vorbehandlung durchzuführen ist, wird weiter unten noch diskutiert werden.

Eine tragende, harte, glatte und undurchlässige Epoxyharz-Innenschicht 3 ist auf die Zwischenschicht aufgetragen, welche Unterlage für die Verbindung chemisch und physikalisch geeignet ist. Die Schichtdicken sind im Vergleich zum Kanalisationsrohr zu dick gezeichnet. In Wirklichkeit ist die Zwischenschicht vorzugsweise 0.5 bis 1.5 cm dick und die tragende Innenschicht ist vorzugsweise 0.5 bis 1.5 mm dick.

Es hängt nun davon ab, was man in strömungstechnischen Belangen innerhalb der Kanalisation erreichen will. Legt man aus fliesstechnischen Gründen auf eine sehr glatte und gleichmässig gerundete Wandung Wert, so kann eine Spritzvorrichtung mit einem Formrohr kombiniert werden, wie das bspw. im Zusammenhang mit Figur 2 skizziert ist. Da das PUR-Material auf der Unterlage stark haftet, also sehr klebrig ist, muss dieses Formrohr eine Oberflächenbeschaffenheit aufweisen, an der ein Festkleben des Harzes nicht stattfindet. Am vorteilhaftesten ist eine Teflonisierung (PTFE) der Rohroberfläche bzw. eine Polytetrafluoräthylen-Beschichtung. Ist die gleichmässige Rundung nicht wesentlich, so kann eine Spritzvorrichtung ohne Formrohr verwendet werden.

Vorzugsweise wird ohne Formrohr gearbeitet. In den meisten Fällen lässt sich das Harzsystem in freier Schäumung auftragen. Man spritzt das vorbereitete, gemischte Harzsystem unter gleichmässigem Rückzug eines Spritz- oder Giesskopfes auf die entsprechend vorbehandelte Kanalisationswand, von wo der sich bildende Schaum frei aufsteigen oder fertig ausbilden kann. Dieses Vorgehen empfiehlt sich beispielsweise, wenn in kurzer Zeit ein Rohrabschnitt abgedichtet werden muss. Bei dieser Methode erhält man allerdings eine unregelmässige Oberfläche (die uneben ist), welche strömungstechnisch weniger ideal aber in vielen Fällen ausreichend ist. Anschliessend wird ein auf einem Schlitten montierter Spritzkopf für das innere Harzsystem durch die ausgeschäumte Röhre gezogen, aus welchem das Epoxy-Harzsystem auf die PUR-Unterlage aufgespritzt wird. Auch dieser Vorgang kann recht rasch ausgeführt werden, sodass die Maschinerie nicht lange im Einsatz sein muss. Das Aushärten erfolgt dann unter Einleiten von warmer Luft in den ausgespritzten Rohrabschnitt, solange, bis die völlige Aushärtung erreicht ist. Die Aushärtung ist in der Regel nach 24 Stunden beendet und der Kanalabschnitt kann wieder frei gegeben werden.

Gegebenenfalls kann noch eine weitere finale Deckschicht aufgetragen werden, was sich jedoch beim freien Schäumen in der Regel erübrigt. Die finale Schicht ist überall dort angebracht, wo ganz spezielle Oberflächenerfordernisse nach einer solchen verlangen.

Bei der hier in Frage kommenden automatischen Maschinenschäumung, werden für den Zusammenbau der zu benützenden Vorrichtung vorzugsweise soviele Geräteteile auf dem Markt erstanden, wie dies überhaupt möglich ist. Automatische Misch- und Spritzmaschinen (Giessmaschinen) mit einer Kapazität bis zu 100 kg/min werden heute durch zahlreiche Herstellerfirmen geliefert. Diese Maschinen bestehen normalerweise aus einem Materialbehälter R1,R2 für jede Komponente und einem Dosiermechanismus, an dem sich das erforderliche Mengenverhältnis einstellen lässt, einem Mischkopf M wo die beiden Komponenten gemischt werden und einer Anzahl Spritzdüsen S, durch welche die Harzmischung in homogener Form austritt. Die Maschinen sind im allgemeinen mit einer Temperaturkontrolle für beide Komponenten versehen. Eine solche Maschine kann für das hier diskutierte Verfahren umgebaut werden.

Für die Vorrichtung mit einem Formrohr, welches nicht auf dem Markt erhältlich ist und Bestandteil der Vorrichtung gemäss Erfindung bildet, wird ein handelsüblicher Misch- und Spritzkopf modifiziert und in ein Formrohr von ungefähr 50 bis 70 cm eingebaut, welches Formrohr, ähnlich wie ein Teleskoprohr, aus drei bis vier ineinanderschiebbaren Ringen besteht. Am Umfang des äussersten und in Zugrichtung -> der Vorrichtung ersten Ringes 5, sind die Materialdüsen (Spritz- oder Giesstüllen) eingebaut. Die nachfolgenden ein oder zwei Ringe 7,8 bilden die Formzone und/oder Nachhärtezone. Solch ein Formrohr kann auch durch eine Krümmung im Kanalisationsrohr gezogen werden, da es sich bis zu einem bestimmten Radius einschlagen (biegen) lässt. Figur 2 zeigt ein Ausführungsbeispiel solch eines Formrohres.

Im Kanalisationsrohr 1 wird mit Hilfe einer Winde an einem Seil 10 die Vorrichtung (die vorteilhafterweise einen Eigenantrieb aufweist) in das zu sanierende Rohr eingezogen bzw. eingefahren. Die Vorrichtung ist durch Schläuche 11 und durch elektrische Anschlüsse, welche hier nicht dargestellt sind, mit Aggregaten verbunden, durch welche die Betriebsenergie und die Betriebsmittel der Vorrichtung zugeführt werden. Die Vorrichtung weist getrennte Kanäle R1 und R2 auf, durch welche die Harz-Komponenten in die Mischkammer geführt werden. In der Mischkammer M, in der eine durch einen Mischermotor 12 angetriebene Mischvorrichtung 13 rührt, werden die Harzkomponenten vermischt und das schaumfähige Harzgemisch durch Düsenrohre 6, die im Querschnitt sternförmig angelegt sind den Düsen oder Tüllen S zugeleitet und dort ausgestossen. Eine Zentrier- und zugleich Abdichteinrichtung 9 verhindert das Ausquellen des Harzes in Zugrichtung, sodass das sich zum Schaum ausbreitende Harz gegen die Zugrichtung in den Formspalt zwischen den Ringabschnitten 7 und 8 ergiessen muss. Bei einer intermittierenden Vorschubgeschwindigkeit, die der Klebfreizeit von 10 bis 15 Sekunden entspricht, können in einer Minute bis zu 2 Meter Schaumbelag gegossen/gespritzt werden.

Die resultierende Zwischenschicht ist mit oder ohne Formrohr relativ glatt und mechanisch so widerstandsfähig, dass später ohne weiteres ein Schlitten für die Epoxyharz-Spritzvorrichtung darin durchgeführt werden kann, ohne dass die Oberfläche der Zwischenschicht beeinträchtigt wird.

Die Ausschäumung mit der isolierenden Zwischenschicht kann nach Belieben gesteuert werden. An Stellen mit grossräumigen Schäden kann solange "gegossen" werden, bis die schadhafte Stelle ausgefüllt ist. Erst wenn dies geschehen ist, wird die Sprüh- oder Giessvorrichtung weitergezogen. Auf diese Weise hat man ein sehr flexibles Reparatursystem, da, ungeachtet der Dicke der Zwischenschicht, die teuere Nachbeschichtung mit dem mechanisch und chemisch resistenten Epoxyharzsystem immer gleich dick herauskommt.

Der hier vorgeschlagene, schnell reagierende PUR-Schaum ermöglicht bei längeren Kanalabschnitten eine relativ kurzfristig der Schäumung nachfolgende Deckschichtapplikation mit dem Epoxyharz. Das Epoxyharz ist der eigentliche Rohrteil, der später die Funktion der maladen Kanalisation übernehmen soll, und dieser Rohrteil braucht zu seiner vollständigen Aushärtung so an die 24 Stunden. Da jedoch die Zwischenschicht nur einen geringen Bruchteil dieser Zeit benötigt, kann davon ausgegangen werden, dass ein behandelter Kanalisationsabschnitt mittels forcierter Nachhärtung, bspw. durch Fluten mit heisser Luft, schon nach 24 Stunden wieder einsatzbereit ist.

Das Verfahren sieht vor, dass in einem auszukleidenden Rohr zuerst eine isolierende Grundschicht (Grundierung) aufgebracht wird und auf diese isolierende Grundschicht die abzudichtende, mechanisch und chemisch stabile Schicht appliziert wird. Die Grundierung bildet für das abdichtende Harzsystem die thermisch und chemisch richtige Unterlage, auf welcher sich die gewünschte Beschichtung, trotz Schmutz und Nässe im Kanalisationsrohr so aufgebracht werden kann, dass eine vorschriftsmässige Härtung möglich ist und die Standzeit dem verwendeten Material entspricht.

In der Weiterentwicklung des Verfahrens wurde ein spezielles Beschichtungsverfahren gefunden, das nur einen Beschichtungsvorgang erfordert und ausserdem keine Formgebungsgeräte und damit auch keine Trennmittel benötigt. Dieses neue Beschichtungsverfahren ist ein Schleuderverfahren welches einen Direktauftrag auf die bspw. Betonunterlage in einem Kanalisationsrohr erlaubt und in der Regel, wie schon gesagt, in einem einzigen Durchgang ausführbar ist. Die Polyurethansprühschäume werden üblicherweise entweder von Hand gegossen oder maschinell versprüht. Anschliessend lässt man die aufgetragene Masse steigen. Das in der Mischung enthaltene flüssige Treibgas treibt durch den Phasenübergang flüssig/gasförmig die viskose Harzmasse schaumig auf und bildet so einen geschlossenzelligen Körper von geringem spezifischen Gewicht. Unterdrückt man den Steig- oder Schäumungsvorgang, so nimmt sukzessive die Dichte der Schicht zu und es entsteht eine zellenarme Harzschicht von wesentlich höherem spezifischem Gewicht, die vollständig dicht und zudem mechanisch stabil ist. Dies führte zu der Idee, alternativ zur Zweischichtenmethode eine Einschichtenmethode zu entwickeln, möglichst auf einer ähnlichen Harzbasis und mit möglichst ähnlichen Geräten durchführbar. Dies ist gelungen, mit dem nachfolgend beschriebenen Schleuderverfahren. Anstatt dass die Harzmasse gegossen oder versprüht wird, wird sie auf die Unterlage aufgeschleudert, das heisst, mit grosser kinetischer Energie auf die Rohrinnenwand appliziert. Die auf diese Weise entstandene Harz-Schicht ist dicht, zäh und hart.

Damit die aufgetragene Dickschicht vor dem Aushärten nicht der Schwerkraft folgend auf die Kanalsohle zurückfliesst, muss sie entweder unter Zugabe eines Thixotropiemittels (die zu solchen Harzsystemen jeweils erhältlich sind) entsprechend thixotropiert oder im selben Durchgang weniger dick, also nur eine Teilschicht aufgetragen werden. Letzteres erfordert wohl mehrere Durchgänge, ist aber verfahrenstechnisch auch leichter beherrschbar.

Gemäss dieser Methode ist die finale Schicht nur noch fakultativ. Wenn eine solche erwünscht ist, so dient die geschleuderte Schicht, gleich wie die geschäumte Schicht, als wärmedämmende Unterlage, allerdings mit geringerer Wärmedämmwirkung, die aber als ausreichend gut zu bezeichnen ist. In der Regel ist jedoch eine nachträgliche Beschichtung mit bspw. einem Epoxidharz nicht nötig.

Zur Reparatur eines undichten Kanalisationsabschnitts geht man folgendermassen vor. Das zu sanierende Rohr, dessen undichte Stellen vorher bspw. mittels TV ermittelt wurden, wird gemäss bekanntem Vorgehen bspw. Wasserjet ausgewaschen. Nach einer groben Trocknung wird das noch nasse Rohr (das keine Wasserpfützen aufweisen darf, evtl. das Wasser aufsaugen) mit der Isocyanat-Komponente des verwendeten Polyurethan-Harzsystems besprüht, um die restliche Oberflächenfeuchte zu binden. Diese Vorbehandlung ist auch bei mässiger Feuchte, sogar dann, wenn keine Feuchte festzustellen ist, durchzuführen. Nur diese Vorbeahndlung garantiert, dass sich die Harzschicht nicht von der Unterlage ablöst und Blasen bildet. Durch diese Vorbehandlung wird man befriedigende Standzeiten des Sanierungsbelages in der Kanalisation erhalten. In diesem Beispiel ist es vorzugsweise ein Harzsystem:
vom **Typ Polylite VP-626 RG30/8664** der Firma Reichhold Chemie AG, CH-5212 Hausen bei Brugg (Schweiz), für harten Polyurethansprühschaum speziell für die Anwendung eines maschinellen Sprühen. Die Mischungsverhältnisse entnimmt man dem Datenblatt und der Anleitung des Herstellers, ebenso die Mischvorschriften;
oder ein äquivalentes Harzsystem
Vom **Typ Resicast GH65** von Shell Chemie, ein besonders widerstandsfähiger Polyurethanharz mit guter Haftfähigkeit auf Beton und mit einer Restelastizität um Rissbildungen zu überbrücken. Die Mischungsverhältnisse entnimmt man ebenfalls dem Datenblatt und der Anleitung des Herstellers, ebenso die Mischvorschriften.

Dieses Besprühen kann mit dem gleichen Gerät durchgeführt werden, mit welcher dann das Harz-System geschleudert wird. Nach ungefähr einer Stunde hat das Isocyanat mit dem Wasser genügend reagiert, um als Haftgrund für die nachfolgende Harzbeschichtung zu dienen. Mit dieser Massnahme wird, wie schon gesagt, einer Blasenbildung bzw. einer Ablösung zwischen Harzschicht und feuchter Unterlage vorgebeugt. Anschliessend kann mit derselben Maschine die Harzmischung ohne Schwierigkeiten durch Schleudern auf die vorbereitete Oberfläche appliziert werden. Durch die kurze Crèmezeit und Klebfreizeit hat man die Möglichkeit, besonders schwierige Oberflächen in kürzester Zeit zu isolieren. Der Harz-Auftrag wird so eingestellt, dass die gebildete Schicht ungefähr 0.5 bis 1 cm (in Ausnahmefällen bis 1.5 cm) dick ist. An besonders heiklen Stellen, bspw. bei Einbrüchen im Rohr, kann der Vorschub verlangsamt werden, sodass die Schicht dicker und entsprechend fester wird. Die Schicht zeigt gute mechanische Eigenschaften wegen ihrer weitgehenden Porenfreiheit.

Mit einem solchen Harzsystem erhält man eine geschlossene, wasserundurchlässige Schicht. Die Crèmezeit beträgt 2-3 s und die Klebfreizeit 10-15 s, die ideale Mischtemperatur liegt bei 20°C. Die Druckfestigkeit der ausgehärteten Schicht beträgt über 2 kJ/m², wodurch eine weitere Bearbeitung innerhalb des Rohrgebildes ohne weiteres möglich ist. Die kurze Aushärtdauer, die durch Einleiten von warmer Luft unterstützt werden kann, erlaubt mit einer gängigen Schleuder-Vorrichtung eine "Rohrbildungsgeschwindigkeit" bis zu ca. 2m/min, was eine sehr befriedigende Leistung darstellt.

Der PUR-Harz haftet ohne weiteres auf der mit der Isocyanatkomponente vorbehandelten Unterlage. Fakultativ kann eine weitere tragende, harte, glatte und undurchlässige Epoxyharz-Innenschicht (finale Schicht) aufgetragen werden, wobei die PUR-Unterlage für die Verbindung mit dem Epoxyharz chemisch und physikalisch geeignet ist. Diese Schichtdicken sind im Vergleich zum PUR-Belag relativ dünn, vorzugsweise 0.5 bis 1.5 mm dick während die äussere Schicht vorzugsweise 0.5 bis 1.5 cm dick ist. Im Verhältnis also 1:10.

Ob eine finale Schicht aufgebracht werden soll oder nicht, hängt bspw. von den strömungstechnischen Belangen innerhalb der Kanalisation ab, die man erreichen will. Mit der finalen Schicht kann auch, wie schon gesagt, die Festigkeit der Gesamtbeschichtung verbessert werden. Ferner ist es nicht nötig, eine solche zweite Schicht über die ganze Rohrlänge vorzusehen. Man kann lediglich dafür vorgesehene Abschnitte damit versehen, denn in der Regel reicht die in einem Durchgang aufgeschleuderte PUR-Schicht völlig aus.

Wird eine finale Schicht mit einem Epoxi-Harzsystem aufgetragen, so ist es dringend zu empfehlen, für jedes Harzsystem (Epoxi und PUR) ein eigenes Applikationsgerät zu verwenden, da diese Harzsysteme miteinander reagieren. Gegenseitige Verunreinigungen würden zu unliebsamen Verstopfungen der Düsen und Harzuführungen führen, die sich nicht mehr entfernen lassen. Da man bei diesem neuen Verfahren keine Mittel zur Formung der Schicht braucht, benötigt man auch keine Formtrennmittel mehr, sodass die Vorschubgeschwindigkeit sehr hoch gehalten werden kann. Dies ist deswegen schon interessant, weil in ausserordentliche kurzer Zeit ein Rohrabschnitt abgedichtet werden kann (auch in Notfällen). Bei einem zu raschen Vorschub kann man allerdings eine unregelmässige Oberfläche (die uneben ist) erhalten, welche strömungstechnisch weniger ideal aber in vielen Fällen ausreichend ist. Das Aushärten dauert in der Regel ca. 1 Std. und kann unter Einleiten von warmer Luft in den ausgespritzten Rohrabschnitt unterstützt werden. Die vollständige Aushärtung ist in der Regel nach einigen Stunden beendet und der Kanalabschnitt kann wieder frei gegeben werden.

Bei der hier in Frage kommenden automatischen Harzbeschleuderung werden für den Zusammenbau der zu benützenden Vorrichtung vorzugsweise soviele Geräteteile auf dem Markt erstanden, wie dies überhaupt möglich ist. Automatische Misch- Schleuder und Spritzmaschinen (Giessmaschinen) mit einer Kapazität bis zu 50 kg/min werden heute durch verschiedene Herstellerfirmen geliefert. Diese Maschinen bestehen normalerweise aus einem Materialbehälter für jede Komponente, einem Dosiermechanismus, an dem sich das erforderliche Mengenverhältnis einstellen lässt, einem Mischkopf, wo die beiden Komponenten gemischt werden und einem Schleuderkopf mit einer auf den Schleuderteller gerichteten Schleuderdüse, durch welche die Harzmischung in homogener Form austritt und verteilt wird. Die Maschinen sind im allgemeinen mit einer Temperaturkontrolle für beide Komponenten versehen. Eine solche Maschine kann für das hier diskutierte Verfahren verwendet werden.

Die Auskleidung mit der isolierenden Zwischenschicht kann nach Belieben gesteuert werden. An Stellen mit grossräumigen Schäden kann solange "geschleudert" werden, bis die schadhafte Stelle ausgefüllt ist. Erst wenn dies geschehen ist, wird die Schleudervorrichtung im Kanal weitergeführt. Die Vorrichtung wird derart duch den Kanal geführt dass das Dreh-Zentrum des rotierenden Schleuderkopfes entlang der Rohrlängsachse geführt wird, damit die aufgeschleuderte Beschichtung gleichmässig wird. Auf diese Weise hat man ein sehr flexibles Reparatursystem, bei dem die Parameter leicht eingestellt werden können.

Das hier vorgeschlagene, schnell reagierende PUR-Harzsystem ermöglicht bei längeren Kanalabschnitten, wenn erforderlich, eine relativ kurzfristig der Beschichtung nachfolgende Finalschichtapplikation mit einem Epoxyharz. Das Epoxyharz ist dann der finale Rohrteil, der später die Funktion der defekten Kanalisation übernehmen soll, und dieser Rohrteil braucht zu seiner vollständigen Aushärtung so an die 24 Stunden.

Die hier vorgeschlagene Methode hebt praktisch alle bekannten Nachteile der verschiedenen Vorgehen zur Abdichtung und Sanierung von Rohren, insbesondere Kanalisationsrohren, auf. Sie nützt vorhandene Hilfsmittel in vorteilhafter Weise und sie ist kostengünstig und unerreichbar schnell. Die mit dieser Methode erzeugten Rohre oder Auskleidungen haben, da sie die Harzsysteme in fast idealer Weise aushärten lässt, hohe Standzeiten, die mit den für die entsprechenden Systeme angegebenen Standzeiten praktisch übereinstimmen.

## Patentansprüche

1. Verfahren zum Abdichten von Rohren, insbesondere von Kanalisationsrohren, bei welchem ein härtbarer Polyurethanharz auf die Innenfläche des Rohres aufgebracht wird, dadurch gekennzeichnet, dass die Innenfläche des gereinigten Rohres in einem vorbereitenden Schritt mit der wasseraktiven Isocyanat-Komponente des verwendeten Polyurethanharzes behandelt wird.

2. Verfahren nach Anspruch 1, dadurch gekennzeichnet, dass der vorbereitende Schritt im Aufbringen der Isocyanat-Komponente des Polyurethanharzes besteht und dass in einem nachfolgenden Schritt die härtbare Harzmischung auf die vorbehandelte Rohrinnenfläche aufgeschleudert wird.

3. Verfahren nach Anspruch 2, dadurch gekennzeichnet, dass das Dreh-Zentrum des rotierenden Schleuderkopfes entlang der Rohrlängsachse geführt wird.

4. Verfahren nach Anspruch 3, dadurch gekennzeichnet, dass die Längsbewegung mit konstanter Geschwindigkeit durchgeführt wird, um eine gleichmässig dicke Schicht zu erhalten.

5. Verfahren nach Anspruch 3, dadurch gekennzeichnet, dass die Längsbewegung mit variabler Geschwindigkeit durchgeführt wird, um an bestimmten Zonen eine dickere Schicht herzustellen.

6. Verfahren nach einem der Ansprüche 1 bis 5, dadurch gekennzeichnet, dass dem Harzsystem ein Thixotropiermittel zugegeben wird.

7. Verfahren nach Anspruch 1 bis 6, dadurch gekennzeichnet, dass zur Bildung einer weiteren abdichtenden Schicht ein Harzsystem mit grösserer Härte aufgetragen wird.

8. Verfahren nach Anspruch 7, dadurch gekennzeichnet, dass die zusätzliche abdichtende und härtere Schicht aus einem Epoxydharzsystem gebildet wird.

## Claims

1. Process for sealing pipes, particularly sewer pipes, comprising the application of a hardenable polyurethane resin on the inner surface of the pipe, characterized in that the inner surface of the cleaned pipe is treated in a preparing process step with the water-active isocyanate component of the used polyurethane resin.

2. Process according to claim 1, characterised in that the preparing process step consists in applying the isocyanate component of the polyurethane resin and that in a subsequent step, the hardenable resin mixture is centrifuged onto the treated pipe inner wall.

3. Process according to claim 2, characterised in that the rotation centre of the rotating centrifugal head is passed along the longitudinal axis of the pipe.

4. Process according to claim 3, characterised in that the longitudinal movement is performed at a constant speed in order to obtain a uniformly thick coating.

5. Process according to claim 3, characterised in that the longitudinal movement is performed at a variable speed, so as to produce a thicker layer in certain areas.

6. Process according to one of the claims 1 to 5, characterised in that a thixotropic agent is added to the resin system.

7. Process according to one of the claims 1 to 6, characterised in that a harder resin system is applied for forming a further sealing coating.

8. Process according to claim 7, characterised in that the additional sealing and harder coating is formed by an epoxy resin system.

## Revendications

1. Procédé pour étancher des tuyaux, plus particulièrement des tuyaux de canalisation, selon lequel la face intérieure du tuyau est recouverte de résine polyuréthanique durcissable, caractérisé en ce que, dans une étape préparatoire, la face intérieure du tuyau ayant été nettoyée est traitée avec la composante isocyanatique hydroactive de la résine polyuréthanique utilisée.

2. Procédé selon la revendication 1, caractérisé en ce que l'étape préparatoire consiste a appliquer la composante isocyanatique de la résine polyuréthanique et en ce que dans une étape suivante, le mélange de résine durcissable est appliqué par centrifugation sur la face intérieure préparée du tuyau.

3. Procédé selon la revendication 2, caractérisé en ce que le centre de rotation d'une tête centrifugeuse rotative est guidé le long de l'axe longitudinal du tuyau.

4. Procédé selon la revendication 3, caractérisé en ce que le mouvement longitudinal est exécuté à vitesse constante afin d'obtenir un revêtement d'une épaisseur constante.

5. Procédé selon la revendication 3, caractérisé en ce que le mouvement longitudinal est exécuté à vitesse variable afin d'obtenir un revêtement plus épais en certaines zones.

6. Procédé selon une des revendications 1 à 5, caractérisé en ce que un agent thixotrope est ajouté à la résine.

7. Procédé selon une des revendications 1 à 6, caractérisé en ce que une résine plus dure est appliquée afin d'obtenir une autre couche étanche.

8. Procédé selon la revendication 7, caractérisé en ce que la couche étanche plus dure ajoutée est formée d'une résine époxy.
